# EUROPEAN PATENT APPLICATION

(11) **EP 3 854 692 A1**
(43) Date of publication of application: **28.07.2021**
(21) Application number: 21151659.6
(22) Date of filing: 14.01.2021
(51) Int. Cl.: B64D 43/00, B60T 8/17, B64D 45/00, B64D 45/08, G01C 23/00, G08G 5/00, G08G 5/02

(54) **SYSTEM AND METHOD FOR RUNWAY CONDITION CODE USAGE IN COCKPIT AVIONICS**

(30) Priority: 22.01.2020 IN 202011002832; 24.11.2020 US 202017102614
(71) Applicant: Honeywell International Inc., Charlotte, NC 28202 (US)
(72) Inventor: KANAGARAJAN, Sivakumar, Charlotte, NC 28202 (US); GOVINDILLAM, Sreenivasan, Charlotte, NC 28202 (US)
(74) Representative: LKGlobal UK Ltd.

(57) **Abstract**

A flight deck system includes a cockpit display device (108) on which an airport display is displayed and a controller (102). The controller (102) is configured to generate a runway condition graphic (209, 302, 322) having at least three different segments (304, 306, 308) to be overlaid over or positioned adjacent to a depiction of a runway on the airport display, wherein each segment (304, 306, 308) of the runway condition graphic (209, 302, 322) is associated with a different segment (304, 306, 308) of the runway and configured to provide a graphical indication of a contaminant condition for the associated segment (304, 306, 308) . The controller (102) is further configured to categorize the contaminant condition of each segment (304, 306, 308) of the runway; visually code each segment (304, 306, 308) of the runway condition graphic (209, 302, 322) in a manner that is representative of the contaminant condition category for its associated segment (304, 306, 308) of the runway; and cause the generated runway condition graphic (209, 302, 322) to be overlaid over or positioned adjacent to the depiction of the runway on the airport display.

## Description

### CROSS REFERENCE TO RELATED APPLICATION

This application claims priority to Indian Provisional Patent Application No. 202011002832, filed January 22, 2020, the entire content of which is incorporated by reference herein.

### TECHNICAL FIELD

Embodiments of the subject matter described herein relate generally to aircraft. More particularly, embodiments of the subject matter relate to flight deck systems integrating runway contaminant information into one or more flight deck runway functions.

### BACKGROUND

A significant number of aircraft accidents and incidents arise from runway overrun and veer-off events (collectively referred herein to as "runway excursions"). Runway excursions occur when the flight crew is unable to stop an aircraft within the available runway length due to, for example, runway contaminants such as rainwater, snow, ice, etc. This may result from an inadequate understanding of the current runway surface conditions by the flight crew. The presence of liquid contaminants (*e.g*., liquid water, snow, slush, ice, oil, and the like) or solid contaminants (*e.g*., rubber deposits from aircraft tires) on the runway surface can greatly reduce the braking friction coefficient and thus adversely affect the aircraft braking performance. For example, the rollout distance required for a commercial aircraft to reach full stop on a wet runway surface can be more than .the distance required by the aircraft to stop on the same runway when dry. Providing the flight crew with prior knowledge of the current runway surface conditions prior to takeoff or landing at a runway can enable the flight crew to more appropriately maneuver the aircraft.

Hence, it is desirable to provide improved methods and systems for providing a flight crew with prior knowledge of the current runway surface conditions prior to takeoff or landing. Furthermore, other desirable features and characteristics of the present invention will become apparent from the subsequent detailed description and the appended claims, taken in conjunction with the accompanying drawings and the foregoing technical field and background.

### SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A flight deck system for deployment onboard an aircraft is disclosed. The flight deck system includes a cockpit display device on which an airport display is displayed and a controller. The controller is configured to generate a runway condition graphic having at least three different segments to be overlaid over or positioned adjacent to a depiction of a runway on the airport display, wherein each segment of the runway condition graphic is associated with a different segment of at least three different contiguous segments of the runway and configured to provide a graphical indication of a contaminant condition for the associated segment of the runway. The controller is further configured to categorize the contaminant condition of each of the at least three different segments of the runway; visually code each segment of the runway condition graphic in a manner that is representative of the contaminant condition category for its associated segment of the runway; and cause the generated runway condition graphic to be overlaid over or positioned adjacent to the depiction of the runway on the airport display.

A method in an aircraft having a cockpit display device on which an airport display is displayed is disclosed. The method includes generating a runway condition graphic having at least three different segments to be overlaid over or positioned adjacent to a depiction of a runway on the airport display, wherein each segment of the runway condition graphic is associated with a different segment of at least three different contiguous segments of the runway and configured to provide a graphical indication of a contaminant condition for the associated segment of the runway. The method further includes categorizing the contaminant condition of each of the at least three different segments of the runway; visually coding each segment of the runway condition graphic in a manner that is representative of the contaminant condition category for its associated segment of the runway; and causing the generated runway condition graphic to be overlaid over or positioned adjacent to the depiction of the runway on the airport display.

A method in an aircraft having a cockpit display device on which an airport display is displayed is disclosed. The method includes: dividing a runway approached for use into three segments (*e.g*., Touchdown, Midpoint and Rollout); calculating landing parameters using the runway condition code (RWYCC) for the three runway segments, wherein the calculating includes calculating a required runway length by calculating a first landing distance for a runway segment (*e.g*., Touchdown segment) of the runway, calculating a second landing distance for a second runway segment (*e.g*., midpoint segment), and calculating a third landing distance for a third runway segment (*e.g*., rollout segment); determining whether the required runway length (*e.g.,* first landing distance + second landing distance + third landing distance) is less than the available runway length for the approached runway; and when the required runway length is less than the available runway length, alerting the flight crew of a short runway condition.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

Embodiments of the subject matter will hereinafter be described in conjunction with the following drawing figures, wherein like numerals denote like elements, and wherein:
FIG. 1 is a block diagram depicting an example flight deck system deployed onboard an aircraft, in accordance with some embodiments;
FIG. 2 is a block diagram depicting an example controller for use in a flight deck system, in accordance with some embodiments;
FIG. 3A is a diagram depicting an example runway condition graphic, in accordance with some embodiments;
FIG. 3B is a diagram depicting the example runway condition graphic 302 that has been overlaid a runway on a 3-D AMM on a NAV display, in accordance with some embodiments;
FIG. 3C is diagram depicting an example runway condition graphic displayed over a runway on a 3-D AMM on a NAV display, in accordance with some embodiments;
FIG. 4 is a diagram depicting is a diagram depicting an example PFD with condition code information, in accordance with some embodiments;
FIG. 5A is a diagram depicting an example 2-D AMM displayed on a NAV display, in accordance with some embodiments;
FIG. 5B is a diagram depicting another example 2-D AMM displayed on a NAV display, in accordance with some embodiments;
FIG. 6 is a process flow chart depicting an example process in a flight deck system, in accordance with some embodiments; and
FIG. 7 is a process flow chart depicting an example process in a controller, in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "pilot" encompasses all members of a flight crew. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, *e.g.,* memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

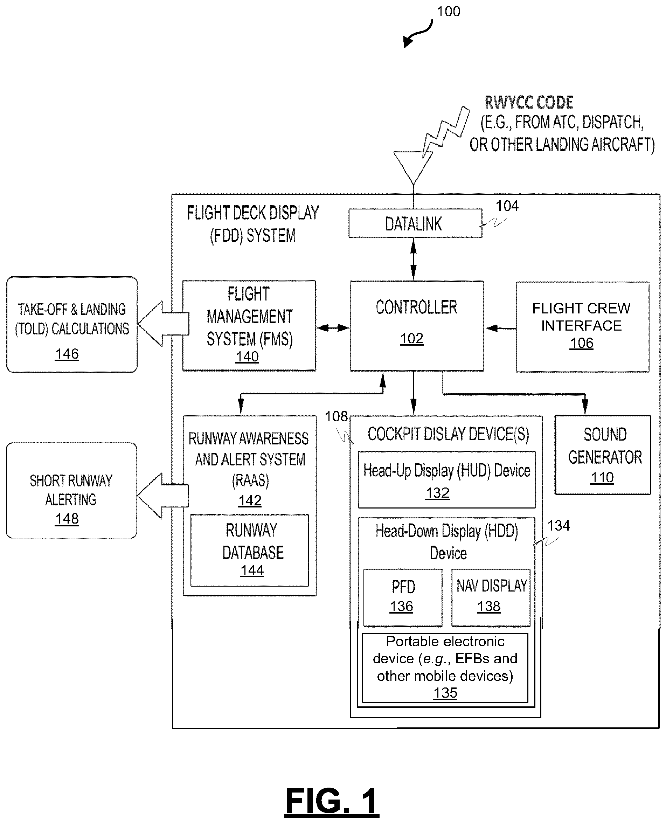

FIG. 1 is a block diagram depicting an example flight deck system 100 deployed onboard an aircraft. The example flight deck system 100 includes a controller 102, a datalink 104 communicatively coupled to an input of the controller 102, a flight crew interface 106 communicatively coupled to an input of the controller 102, one or more cockpit display devices 108 communicatively coupled to one or more outputs of the controller 102, and a sound generator 110 communicatively coupled to an output of the controller 102.

The example controller 102 obtains and processes runway (RWY) contaminant information indicative of runway contaminants on a plurality of runway segments on one or more runways. The example controller 102 includes at least one processor and a computer-readable storage device or media encoded with programming instructions for configuring the controller. The processor may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller.

The RWY contaminant information may be reported to the aircraft via messages sent from Air Traffic Control (ATC), airline dispatch, or the crew of another aircraft. Messages can be provided as voice broadcasts, digital Notices to Airmen (NOTAMS), Automated Terminal Information Service (ATIS) messages, and/or CPDLC (controller pilot data link messages). Additionally, the flight crew of an aircraft that has recently landed at a particular runway may report runway contaminant information regarding the runway when providing a Pilot Information Report (PIREP). The ATC may then communicate the runway contaminant information to approaching aircraft preparing to land at the runway by, for example, a Voice broadcast. This practice can help improve aircraft safety.

The RWY contaminant information may be communicated using a RWY Condition code (RWYCC) for each of a plurality of runway segments (e.g., three segments) for a runway and may be manually entered into the controller 102 by a flight crew member utilizing a flight crew interface 106. The flight crew interface 106 can be any device or group of devices enabling a flight crew member to input data into the flight deck system 100, such as various combinations of switches, dials, buttons, keyboards, touchscreens, cursor devices, and other input devices. The flight crew may obtain the RWY contaminant information from, for example, a voice broadcast or a digital message.

The RWY contaminant information may be received wirelessly from a remote source via the datalink 104 in real-time. The datalink 104 can assume any form suitable for receiving wireless signals containing RWY contaminant information from one or more remotely-located data sources. Sources from which datalink 104 may receive RWY contaminant information include, but are not limited to, Air Traffic Control (ATC), airline dispatch, and other aircraft reporting RWY contaminant information after using a particular runway for takeoff or landing. The RWY contaminant information may be provided in the form of, for example, a CPDLC, a PIREP, a digital Notice to Airmen (NOTAM), and/or an Automated Terminal Information Service (ATIS) transmission.

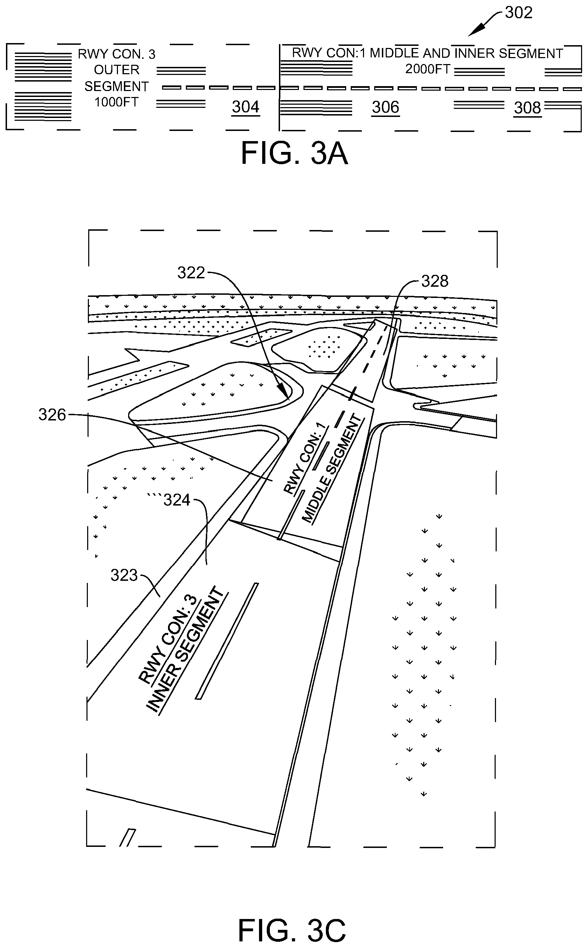

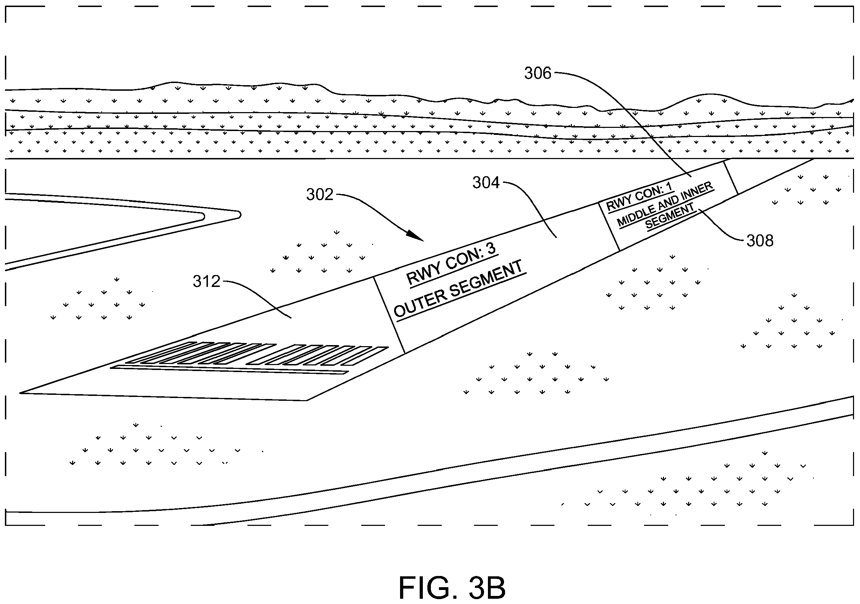

The cockpit display devices 108 can include any image-generating device that operates in the cockpit of an aircraft that provides an airport display (*e.g.,* a display on which images representative of an airport surface are generated, or a display superimposed over a real-world view of an airport surface as seen from the cockpit of the aircraft). The cockpit display devices 108 can include a Head-Up Display (HUD) device 132 and/or Head-Down Display (HDD) devices 134. The HUD device 132 can be, for example, a transparent or partially-transparent screen affixed to the aircraft cockpit on which graphics may be generated to effectively superimpose the graphics over the real-world view of airport surfaces. Other examples of HUD devices include pilot-worn display devices, such as helmet-mounted and near-to-eye display devices. The HDD devices 134 can include display devices that are affixed to or installed in an aircraft cockpit, as well as portable electronic devices 135 carried into the aircraft cockpit by a flight crew member (*e.g*., tablet computers, laptops, Electronic Flight Bags, or other mobile devices) on which an airport display is produced while the electronic device is located in the cockpit. When produced on one or more of HDD devices 134, the airport display will often assume the form of a two dimensional (2D) Airport Moving Map (AMM) generated on a navigational (NAV) display or a three dimensional (3D) AMM generated on a Primary Flight display (PFD). Examples of such displays are discussed below in conjunction with FIGS. 3-5.

A Primary Flight Display (PFD) 136 and/or a NAV display 138 can be generated on the HDD devices 134. The PFD 136 can be generated in a three dimensional (3D) format, typically from a perspective viewpoint, and may depict a 3D AMM when the aircraft is located on, above, or in close vicinity to an airport surface. The 3D AMM may thus be considered part of the PFD when the aircraft is located at an airport and the PFD displays the runways and other surfaces (*e.g*., taxiways) of the airport. In contrast, a NAV display 138 is generated in a two dimensional (2D) or plan format, typically from a top-down viewpoint; and depicts a 2D AMM when the Field-of-View (FOV) of NAV display 138 encompasses an airport surface due to the location of the aircraft or pilot selection of the FOV of the display. Thus, the 2D AMM may be generated as part of a NAV display when depicting an airport layout including runways, intersecting taxiways, and other runway surface features. As an example, the NAV display 138 may be an interactive navigation display (commonly referred to as an "iNAV" display), which enables a pilot to select items (*e.g.,* a runway or waypoint) depicted on the iNAV display to summon an informational window describing certain aspects of the selected item.

The example flight deck system 100 further includes an FMS 140 and an RAAS 142. The FMS 140 and the RAAS 142 are each coupled to the controller 102 for bi-directional communication therewith. While the controller 102, FMS 140, and RAAS 142 are illustrated as distinct blocks in FIG. 1, the controller 102 in some examples may be integrated into or may be part of the FMS 140, RAAS 142, or another aircraft system. Furthermore, the individual elements and components of flight deck system 100 can be implemented in a distributed manner using any number of physically-distinct and operatively-interconnected pieces of hardware or equipment. The lines connecting the components of flight deck system 100 denote operative connections, which can be implemented as hardwire or wireless connections utilizing known aircraft infrastructure connections. In practice, flight deck system 100 and the aircraft on which system 100 is deployed will include various other devices and components for providing additional functions and features, which are not shown in FIG. 1 and will not be described herein to avoid unnecessarily obscuring the invention.

The controller 102 may supply the runway contaminant information to the FMS 140 for usage in carrying-out TOLD calculations, and/or supply the runway contaminant information to the RAAS 142 for usage in determining whether a "Short Runway" alert should be generated. Such systems (flight management systems and runway awareness and alert systems) are well-known in the avionics industry. Generally, the FMS 140 can assume any form suitable for performing TOLD calculations, while the RAAS 142 can assume any form suitable for selectively producing "Short Runway" alerts prior to aircraft takeoff and/or aircraft landing. Furthermore, the RAAS 142 can include a runway database 144, which contains runway lengths and possibly other information pertaining to a database of runways. In one example, the RAAS 142 is a SMARTRUNWAY® and/or a SMARTLANDING® system developed and commercially marked by the assignee of the present application, Honeywell International Inc., currently headquartered in Morristown, N.J.

During operation, the flight deck system 100 receives RWY contaminant information pertaining to a runway approached for use (*e.g.,* a runway approached by the aircraft for purposes of takeoff, landing, or traversal) by the aircraft on which the flight deck system 100 resides. The RWY contaminant information describes the condition of a plurality of different segments of the runway (*e.g.,* three different segments, such as a touchdown, midpoint, and rollout portion of a runway during a landing). The example flight deck system 100 can utilize this RWY contaminant information in a number of manners. The flight deck system 100 can forward this RWY contaminant information to (i) the FMS 140 for usage in performing TOLD calculations and/or to (ii) the RAAS 142 for usage in determining when to generate "Short Runway" alerts. Additionally or alternatively, the example flight deck system 100 can selectively display the RWY contaminant information on a 3D AMM produced on a PFD and/or on 2D AMM produced on a NAV display.

The example controller 102 can command the sound generator 110 to produce a verbal message describing the RWY contaminant information of a runway or runway segment in conjunction with generation of a runway condition graphic. Alternatively, the controller 102 may command sound generator 110 to generate a verbal message or aural alert describing the RWY contaminant information of a runway or runway segment only under selected conditions, such as when the RWY contaminant information indicates that a runway or runway segment may cause extreme difficulty braking. In this latter case, the controller 102 may command the sound generator 110 to generate an audible alert or cautionary message prior to usage of the runway surface by the aircraft, such as "CAUTION: POOR BRAKING CONDITIONS ON RUNWAY."

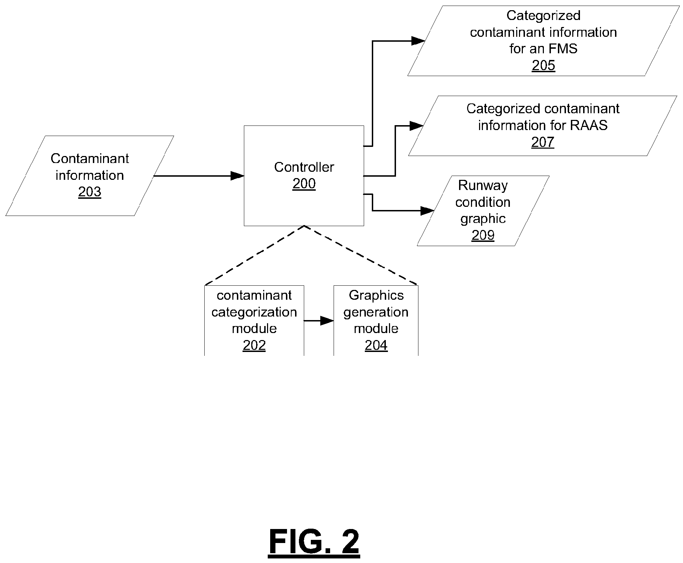

FIG. 2 is a block diagram depicting an example controller 200 for use in a flight deck system. The example controller 200 includes one or more processors configured by programming instruction on non-transient computer readable media to implement a contaminant categorization module 202 and a graphics generation module 204.

The example contaminant categorization module 202 is configured to retrieve contaminant information 203 regarding a runway approached for use, wherein the retrieved contaminant information 203 describes the contaminant condition for each of a plurality of segments of the runway (*e.g.,* three segments, such as touchdown, midpoint, and rollout), and categorize the contaminant condition of each of the plurality of (*e.g.,* at least three) different segments of the runway. The example contaminant categorization module 202 is configured to categorize the contaminant condition of each of the plurality of (*e.g.,* at least three) different segments of the runway based on the received contaminant information 203 for each of the plurality of (*e.g.,* at least three) different contiguous segments of the runway.

The example contaminant categorization module 202 may be configured to receive the runway contaminant information 203 over a datalink. The runway contaminant information 203 may be communicated in the form of a RWY Condition code (RWYCC) for each of the plurality of (*e.g.,* at least three) different contiguous segments of the runway. The runway contaminant information 203 received over a datalink may include CPDLC (controller pilot data link communication), NOTAM (notice to airmen) data, data received from ATC, and/or data received from a leading aircraft that landed at the runway. The example contaminant categorization module 202 may be further configured to transmit the contaminant condition categories for each of the at least three different segments of the runway to a trailing aircraft.

The example contaminant categorization module 202 is further configured to provide categorized contaminant information 205 to an FMS for TOLD calculations and/or categorized contaminant information 207 to a RAAS for generation of a short runway alert when one exists. This can allow the FMS, when performing take-off and landing calculations for the runway, to separately calculate a required landing distance for each of the plurality of runway segments. For example, the FMS may calculate a landing distance for a first segment (*e.g*., touchdown portion) of the runway using the categorized contaminant information 203 for the first segment, calculate a required landing distance for the second segment (*e.g.,* midpoint portion) of the runway using the categorized contaminant information 203 for the second segment, and calculate a required landing distance for the third segment (*e.g*., rollout portion) of the runway using the categorized contaminant condition for the third segment. This may also allow the RAAS to calculate whether a short alert should be generated taking into account the categorized contaminant information 203 for each of the plurality of (*e.g.,* at least three) different contiguous segments of the runway.

The example graphics generation module 204 is configured to generate a runway condition graphic 209 having at least three different segments to be overlaid over or positioned adjacent to a depiction of the runway on an airport display. Each segment of the runway condition graphic 209 is associated with a different segment of at least three different contiguous segments of the runway and configured to provide a graphical indication of the contaminant condition for the associated segment of the runway. The example graphics generation module 204 is configured to visually code each segment of the runway condition graphic 209 in a manner that is representative of the contaminant condition category for its associated segment of the runway and cause the generated runway condition graphic 209 to be overlaid over or positioned adjacent to the depiction of the runway on the airport display. To visually code each segment of the runway condition graphic 209 in a manner that may be representative of the contaminant condition category for its associated segment of the runway, the example graphics generation module 204 may be configured to color code each segment of the runway condition graphic 209 in a color that is representative of the contaminant condition category for its associated segment of the runway. Each segment of the runway condition graphic 209 may include a text annunciation graphic comprising annunciation graphics configured to describe the contaminant condition of its associated segment of the runway. The example graphics generation module 204 may be configured to selectively generate the text annunciation graphic on the airport display in response to flight crew selection of runway condition information received via a flight crew interface.

The airport display may be a three dimensional (3-D) Airport Moving Map (AMM) produced on a primary flight display, and the example graphics generation module 204 may be configured to selectively cause the runway condition graphic 209 to be overlaid over or positioned adjacent to the depiction of the runway on the AMM. The airport display may be a two dimensional AMM, and the runway condition graphic 209 may include a symbol for use with each segment of the runway. In this example, the example graphics generation module 204 may be configured to cause the symbols of the runway condition graphic 209 to be displayed adjacent to the depiction of the associated segment of the runway on the AMM.

The example controller 200 may be further configured to transmit the calculated required landing distance for each of the plurality of segments to a trailing aircraft that has approached the runway for use. For example, the example controller 100 may transmit the calculated required landing distance for the first segment (*e.g*., touchdown portion) of the runway, the second segment (*e.g*., midpoint portion) of the runway, and the third segment (*e.g.,* rollout portion) of the runway to a trailing aircraft that has approached the runway for use.

A flight deck system that implements the example controller 102 or 200 can notify the flight crew of the real-time runway contaminant information obtained via datalink 104 (or entered via flight crew interface 106). The runway contaminant information may be visually conveyed as a runway condition graphic displayed on a PFD 136 or a NAV display 138. The runway condition graphic may be "selectively" displayed, that is, displayed only at selected times or in response to flight crew selection data received via flight crew interface 106. When displayed, the runway condition graphic can be presented in any manner that can be intuitively and rapidly comprehended by a pilot when glancing at the display. For example, the runway condition graphic can be displayed as text, as symbology, or a combination thereof. To quickly relate the runway contaminant status to the flight crew, the runway condition graphic may be categorized, that is, assigned to one of a number of categories or classifications representing different classes of runway contaminant conditions. An example of the manner in which the runway condition graphic can be categorized as illustrated in the table below:

**Table 1**

| Assessment Criteria | |
|---|---|
| Runway Condition Description | Code |
| • Dry | 6 |
| • Frost | 5 |
| • Wet (Includes Damp and 1/8 inch depth or less of water) | |
| | |
| **1/8 inch (3mm) depth or less of:** | |
| • Slush | |
| • Dry Snow | |
| • Wet Snow | |
| **5°F (-15°C) and Colder outside air temperature:** | 4 |
| • Compacted Snow | |
| • Slippery When Wet (wet runway) | 3 |
| • Dry Snow or Wet snow (Any depth) over Compacted Snow | |
| | |
| **Greater than 1/8 inch (3mm) depth of:** | |
| • Dry Snow | |
| • Wet Snow | |
| **Warmer than 1/8 (3mm) inch depth of:** | |
| • Water | |
| • Slush | |
| **Greater than 1/8 inch (3mm) depth of:** | 2 |
| • Water | |
| • Slush | |
| • Ice² | 1 |
| • Wet Ice² | 0 |
| • Slush over Ice | |
| • Water over Compacted Snow² | |
| • Dy snow or Wet Snow over Ice² | |

Table 1 contains a number of categories or classifications to which the contaminant condition of a runway segment may be assigned (see, in particular, the first column of table 41). In this example, seven (7) condition codes may be assigned ranging from six (6), wherein the runway segment is dry, to zero (0) wherein the runway segment contains wet ice, slush over snow, water over compacted snow, and or dry snow or wet snow over ice.

FIG. 3A is a diagram depicting an example runway condition graphic 302. The example runway condition graphic 302 has three segments, each of which is to correspond to a segment of a runway on which the example runway condition graphic 302 is to be overlaid. In this example, the runway condition graphic 302 includes a first segment 304 (designated outer segment), a second segment 306 (designated middle segment), and a third segment 308 (designated inner segment). The first segment 304 has been classified with a runway condition code (RWYCC) of 3 and may be depicted in a color that is indicative of a RWYCC of 3 (*e.g.,* depicted in a yellow color). The second segment 306 and the third segment 308 have been classified with a RWYCC of 1 and may be depicted in a color that is indicative of a RWYCC of 1 (*e.g.,* depicted in a red color). In this example, the runway condition graphic 302 can be color coded and include text to describe the RWYCC of the various runway segments, thus providing a clear indication to the flight crew of the condition of the runway segments represented by the segments of the runway condition graphic 302.

FIG. 3B is a diagram depicting the example runway condition graphic 302 that has been overlaid a runway 312 on a 3-D AMM on a NAV display. The example runway condition graphic 302 has three segments, each of which corresponding to a segment of a runway on which the example runway condition graphic 302 is overlaid. In this example, the runway condition graphic 302 includes a first segment 304 (designated outer segment), a second segment 306 (designated middle segment), and a third segment 308 (designated inner segment). The first segment 304 has been classified with a runway condition code (RWYCC) of 3 and may be depicted in a color that is indicative of a RWYCC of 3 (*e.g.,* depicted in a yellow color). The second segment 306 and the third segment 308 have been classified with a RWYCC of 1 and may be depicted in a color that is indicative of a RWYCC of 1 (*e.g.,* depicted in a red color). In this example, the runway condition graphic 302 can be color coded and include text to describe the RWYCC of the various runway segments, thus providing a clear indication to the flight crew of the condition of the runway segments represented by the segments of the runway condition graphic 302.

FIG. 3C is diagram depicting an example runway condition graphic 322 displayed over a runway 323 on a 3-D AMM on a NAV display. The example runway condition graphic 322 has three segments, each of which corresponding to a segment of the runway 323 on which the example runway condition graphic 322 is overlaid. In this example, the runway condition graphic 322 includes a first segment 324 (designated inner segment), a second segment 326 (designated middle segment), and a third segment 328. The first segment 324 has been classified with a runway condition code (RWYCC) of 3 and may be depicted in a color that is indicative of a RWYCC of 3 (*e.g.,* depicted in a yellow color). The second segment 306 has been classified with a RWYCC of 1 and may be depicted in a color that is indicative of a RWYCC of 1 (*e.g.,* depicted in a red color). The third segment 328 may be classified with a different RWYCC (*e.g.,* 2) and may be depicted in a color that is indicative of the different RWYCC (*e.g.,* depicted in an orange color). In this example, the runway condition graphic 322 can be color coded and include text to describe the RWYCC of the various runway segments, thus providing a clear indication to the flight crew of the condition of the runway segments represented by the segments of the runway condition graphic 322.

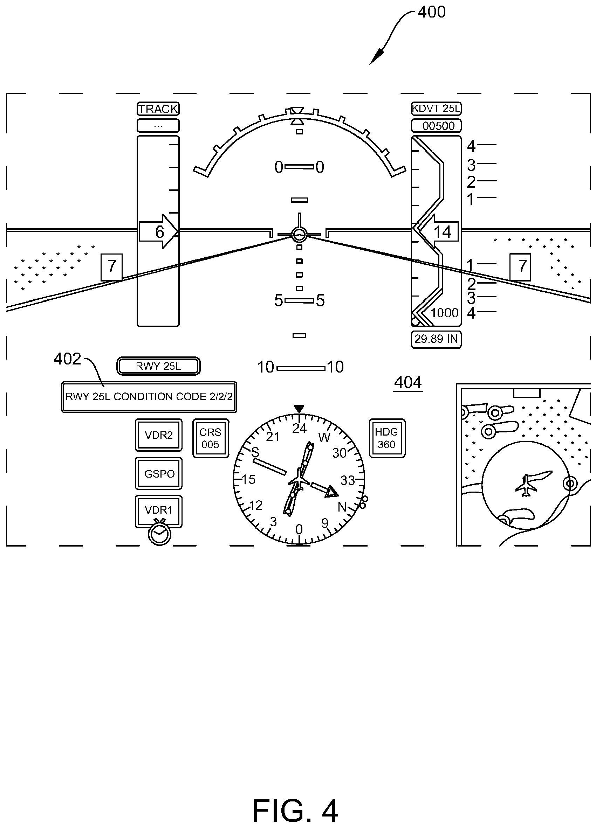

FIG. 4 is a diagram depicting an example PFD 400 with condition code information. In this example, the PFD 400 includes a text annunciation graphic 402 (a type of runway condition graphic) that includes text that describes the RWYCC for three segments of a runway 404. The RWYCC for the three segments of the runway 404, in this example, are 2/2/2, indicating that each of the three segments of the runway 404 has a condition code of 2.

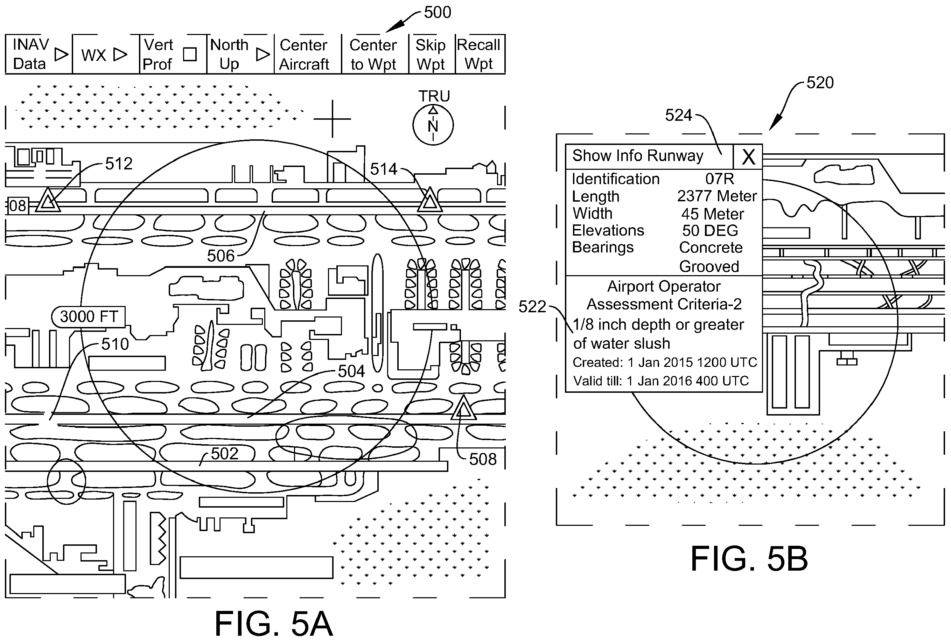

FIG. 5A is a diagram depicting an example 2-D AMM 500 displayed on a NAV display. Depicting on the AMM 500 are three runways 502, 504, and 506. A runway condition graphic comprising a first segment triangle 508 and a second segment triangle 510 are depicted on one runway 504 and a runway condition graphic comprising a third segment triangle 512 and fourth segment triangle 514 are depicted on a second runway 506. Each of the segment triangles 508 may be displayed in a particular color that is indicative of a condition code of the runway segment to which the particular segment triangle is associated.

FIG. 5B is a diagram depicting another example 2-D AMM 520 displayed on a NAV display. Depicted on the AMM 520 is an example runway condition graphic 522. The example runway condition graphic 522 is a text annunciation graphic, in an information window 524 on the 2-D AMM 520, that includes annunciation graphics configured to describe the contaminant condition of a selected segment of a selected runway.

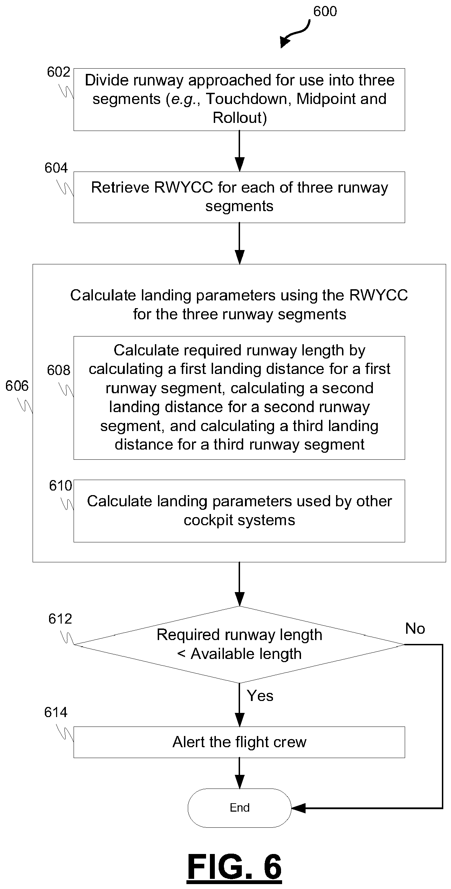

FIG. 6 is a process flow chart depicting an example process in a flight deck system. The order of operation within the process 600 is not limited to the sequential execution as illustrated in the figure but may be performed in one or more varying orders as applicable and in accordance with the present disclosure.

The example process 600 includes dividing a runway approached for use into three segments (Touchdown, Midpoint and Rollout) (operation 602). In this example, the runway approached for use is divided into three segments. In other examples, the runway may be divided into a different plurality of segments.

The example process 600 includes retrieving the RWYCC for each of the three runway segments (operation 604). The RWYCC may be provided as voice broadcasts, digital Notices to Airmen (NOTAMS), Automated Terminal Information Service (ATIS) messages, and/or CPDLC (controller pilot data link messages).

The example process 600 includes calculating landing parameters using the RWYCC for the three runway segments (operation 606). Calculating landing parameters using the RWYCC for the three runway segments, may involve calculating a required runway length by calculating a first landing distance for a runway segment (*e.g*., Touchdown segment) of the runway, calculating a second landing distance for a second runway segment (*e.g.,* midpoint segment), and calculating a third landing distance for a third runway segment (*e.g.,* rollout segment) (operation 608). This may be performed using TOLD software executed, for example, by an FMS. Calculating landing parameters using the RWYCC for the three runway segments, may also involve calculating landing parameters used by other cockpit systems (operation 610).

The example process 600 includes determining whether the required runway length (first landing distance + second landing distance + third landing distance) is less than the available runway length for the approached runway (decision 612). If the required runway length is less than the available runway length (yes at decision 612), then the flight crew is alerted (operation 614) and the process ends. If the required runway length is less than the available runway length (yes at decision 612), then the process ends.

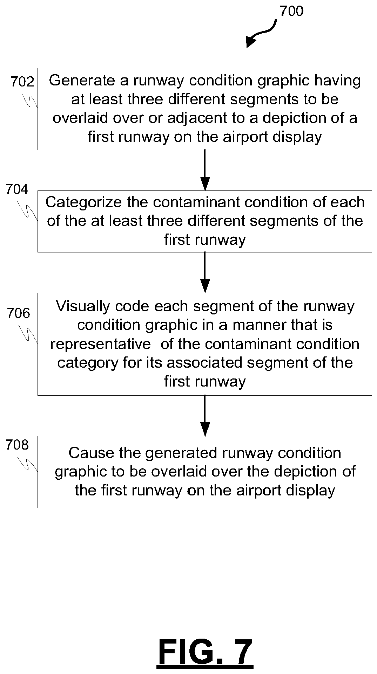

FIG. 7 is a process flow chart depicting an example process in a controller. The order of operation within the process 700 is not limited to the sequential execution as illustrated in the figure but may be performed in one or more varying orders as applicable and in accordance with the present disclosure.

The example process 700 includes generating a runway condition graphic having at least three different segments to be overlaid over or positioned adjacent to or adjacent to a depiction of a runway on an airport display (operation 702). Each segment of the runway condition graphic is associated with a different segment of at least three different segments of the runway and configured to provide a graphical indication of a contaminant condition for the associated segment of the runway.

The example process 700 includes categorizing the contaminant condition of each of the at least three different segments of the runway (operation 704). Categorizing the contaminant condition of each of the at least three different segments of the runway may comprise categorizing the contaminant condition of each of the at least three different segments of the runway based on received contaminant information for each of the at least three different contiguous segments of the runway. The method may further comprise receiving runway contaminant information over a datalink, wherein the runway contaminant information includes contaminant information (*e.g*., RWY Condition code (RWYCC)) for each of the at least three different contiguous segments of the runway (*e.g*., Touchdown, Midpoint and Rollout). The runway contaminant information received over a datalink may be provided by NOTAM (notice to airmen) data, data received from ATC, or data received from a leading aircraft that landed at the runway.

The example process 700 includes visually coding each segment of the runway condition graphic in a manner that is representative of the contaminant condition category for its associated segment of the runway (operation 706). Visually coding each segment of the runway condition graphic in a manner that is representative of the contaminant condition category for its associated segment of the runway may comprise color coding each segment of the runway condition graphic in a color that is representative of the contaminant condition category for its associated segment of the runway. Each segment of the runway condition graphic may include a text annunciation graphic comprising annunciation graphics configured to describe the contaminant condition of its associated segment of the runway.

The example process 700 includes causing the generated runway condition graphic to be overlaid over or positioned adjacent to the depiction of the runway on the airport display (operation 708). The airport display may comprise a two dimensional Airport Moving Map (AMM) produced on a navigation display, and the process 700 may further comprise generating an information window on the two dimensional AMM containing the text annunciation graphic when the runway is selected. The airport display may comprise a three dimensional Airport Moving Map (AMM) produced on a primary flight display, and the process 700 may further comprise selectively causing the runway condition graphic to be overlaid over or positioned adjacent to the depiction of the runway on the AMM. The airport display may comprise a two dimensional Airport Moving Map (AMM) that includes a depiction of the runway on the AMM, the runway condition graphic may comprise a symbol for use with each segment of the runway, and the process 700 may further comprise causing the symbols of the runway condition graphic to be displayed adjacent to the depiction of the associated segment of the runway on the AMM.

Described herein are apparatus, systems, techniques and articles for providing an indicator to the flight crew to look at their performance information and re-evaluate the need for any adjustment to landing or take-off. The apparatus, systems, techniques and articles provided herein can provide an indication that a segment of the runway is contaminated, and a segment of the runway is non contaminated. The apparatus, systems, techniques and articles provided herein can allow for more accurate TOLD calculations.

In one embodiment, a flight deck system for deployment onboard an aircraft is provided. The flight deck system comprises a cockpit display device on which an airport display is displayed and a controller. The controller is configured to generate a runway condition graphic having at least three different segments to be overlaid over or positioned adjacent to a depiction of a runway on the airport display, wherein each segment of the runway condition graphic is associated with a different segment of at least three different contiguous segments of the runway and configured to provide a graphical indication of a contaminant condition for the associated segment of the runway. The controller is further configured to categorize the contaminant condition of each of the at least three different segments of the runway; visually code each segment of the runway condition graphic in a manner that is representative of the contaminant condition category for its associated segment of the runway; and cause the generated runway condition graphic to be overlaid over or positioned adjacent to the depiction of the runway on the airport display.

These aspects and other embodiments may include one or more of the following features. The controller may be configured to receive runway contaminant information over a datalink, wherein the runway contaminant information includes contaminant information (*e.g.,* RWY Condition code (RWYCC)) for each of the at least three different contiguous segments of the runway (*e.g*., Touchdown, Midpoint and Rollout). The runway contaminant information received over a datalink may be provided as part of NOTAM (notice to airmen) data, data received from ATC, or data received from a leading aircraft that landed at the runway.

The controller may be configured to categorize the contaminant condition of each of the at least three different segments of the runway based on the received contaminant information for each of the at least three different contiguous segments of the runway. Each segment of the runway condition graphic may include a text annunciation graphic comprising annunciation graphics configured to describe the contaminant condition of its associated segment of the runway. To visually code each segment of the runway condition graphic in a manner that may be representative of the contaminant condition category for its associated segment of the runway, the controller may be configured to color code each segment of the runway condition graphic in a color that is representative of the contaminant condition category for its associated segment of the runway.

The airport display may comprise a two dimensional Airport Moving Map (AMM) produced on a navigation display or portable electronic device, and the controller may be configured to generate an information window on the two dimensional AMM containing the text annunciation graphic when the runway is selected. The airport display may comprise a three dimensional Airport Moving Map (AMM) produced on a primary flight display or portable electronic device, and the controller may be configured to selectively cause the runway condition graphic to be overlaid over or positioned adjacent to the depiction of the runway on the AMM. The airport display may be produced on a head-down display device and the runway condition graphic may comprise a text annunciation graphic that includes annunciation graphics configured to describe the contaminant condition of the at least three different contiguous segments of the runway. The airport display may comprise a two dimensional Airport Moving Map (AMM) that includes a depiction of the runway on the AMM, the runway condition graphic may comprise a symbol for use with each segment of the runway, and the controller may be configured to cause the symbols of the runway condition graphic to be displayed adjacent to the depiction of the associated segment of the runway on the AMM. The airport display may comprise a map that includes a depiction of the runway and that is produced on a head-down display device, the runway condition graphic may comprise a symbol for use with each segment of the runway, and the controller may be configured to cause the symbols of the runway condition graphic to be displayed adjacent to the depiction of the associated segment of the runway on the AMM.

The flight deck system may further comprise a Flight Management System (FMS) communicatively coupled to the controller, wherein the FMS is configured to receive the categorized contaminant condition for each of the at least three different segments (*e.g*., Touchdown, Midpoint and Rollout) of the runway from the controller, and perform take-off and landing calculations for the runway using the received categorized contaminant information; and wherein the controller may be configured to provide the categorized contaminant condition for each of the at least three different segments of the runway to the FMS for use when performing take-off and landing calculations for the runway. To perform take-off and landing calculations for the runway, the FMS may be configured to calculate a required landing distance for the first segment (*e.g*., touchdown segment) of the runway using the categorized contaminant condition for the first segment, calculate a required landing distance for the second segment (*e.g*., midpoint segment) of the runway using the categorized contaminant condition for the second segment, calculate a required landing distance for the third segment (*e.g*., rollout segment) of the runway using the categorized contaminant condition for the third segment, and provide an alert if the landing distance for a particular runway segment is not sufficient. The flight deck system may further comprise a Runway Awareness and Alert System (RAAS) coupled to the controller that is configured to determine whether to generate a short runway alert for the runway based, at least in part, on the length of the runway and the categorized contaminant condition of the at least three different segments of the runway; and wherein the controller may be configured to provide the categorized contaminant condition of the at least three different segments of the runway to the RAAS for use when determining whether to generate a short runway alert for the runway.

The controller may be further configured to transmit to a trailing aircraft the contaminant condition categories for each of the at least three different segments of the runway. The controller may be further configured to transmit the calculated required landing distance for the first segment (*e.g*., touchdown segment) of the runway, the second segment (*e.g.,* midpoint segment) of the runway, and the third segment (*e.g.,* rollout segment) of the runway to a trailing aircraft. The controller may be further configured to selectively generate the text annunciation graphic on the airport display in response to pilot selection of data received via a flight crew interface.

In another embodiment, a method in an aircraft having a cockpit display device on which an airport display is displayed is provided. The method comprises generating a runway condition graphic having at least three different segments to be overlaid over or positioned adjacent to a depiction of a runway on the airport display, wherein each segment of the runway condition graphic is associated with a different segment of at least three different contiguous segments of the runway and configured to provide a graphical indication of a contaminant condition for the associated segment of the runway. The method further comprises categorizing the contaminant condition of each of the at least three different segments of the runway; visually coding each segment of the runway condition graphic in a manner that is representative of the contaminant condition category for its associated segment of the runway; and causing the generated runway condition graphic to be overlaid over or positioned adjacent to the depiction of the runway on the airport display.

These aspects and other embodiments may include one or more of the following features. The method may further comprise receiving runway contaminant information over a datalink, wherein the runway contaminant information includes contaminant information (*e.g.,* RWY Condition code (RWYCC)) for each of the at least three different contiguous segments of the runway (*e.g*., Touchdown, Midpoint and Rollout). The runway contaminant information received over a datalink may be provided by NOTAM (notice to airmen) data, data received from ATC, or data received from a leading aircraft that landed at the runway. Categorizing the contaminant condition of each of the at least three different segments of the runway may comprise categorizing the contaminant condition of each of the at least three different segments of the runway based on the received contaminant information for each of the at least three different contiguous segments of the runway. Each segment of the runway condition graphic may include a text annunciation graphic comprising annunciation graphics configured to describe the contaminant condition of its associated segment of the runway. Visually coding each segment of the runway condition graphic in a manner that is representative of the contaminant condition category for its associated segment of the runway may comprise color coding each segment of the runway condition graphic in a color that is representative of the contaminant condition category for its associated segment of the runway.

The airport display may comprise a two dimensional Airport Moving Map (AMM) produced on a navigation display, and the method may further comprise generating an information window on the two dimensional AMM containing the text annunciation graphic when the runway is selected. The airport display may comprise a three dimensional Airport Moving Map (AMM) produced on a primary flight display, and further comprising selectively causing the runway condition graphic to be overlaid over or positioned adjacent to the depiction of the runway on the AMM. The airport display may comprise a two dimensional Airport Moving Map (AMM) that includes a depiction of the runway on the AMM, the runway condition graphic may comprise a symbol for use with each segment of the runway, and the method may further comprise causing the symbols of the runway condition graphic to be displayed adjacent to the depiction of the associated segment of the runway on the AMM.

The method may further comprise providing the categorized contaminant condition for each of the at least three different segments of the runway to a Flight Management System (FMS), and performing, using the FMS, take-off and landing calculations for the runway using the received categorized contaminant information. Performing, using the FMS, take-off and landing calculations for the runway using the received categorized contaminant information may comprise calculating a required landing distance for the first segment (*e.g*., touchdown segment) of the runway using the categorized contaminant condition for the first segment, calculating a required landing distance for the second segment (*e.g*., midpoint section) of the runway using the categorized contaminant condition for the second segment, calculating a required landing distance for the third segment (*e.g*., rollout portion) of the runway using the categorized contaminant condition for the third segment, and providing an alert if the landing distance for a particular runway segment is not sufficient. The method may further comprise: providing the categorized contaminant condition of the at least three different segments of the runway to a Runway Awareness and Alert System (RAAS) and determining, using the RAAS, whether to generate a short runway alert for a runway segment based, at least in part, on the length of the runway and the categorized contaminant condition of the at least three different segments of the runway. The method may further comprise transmitting to a trailing aircraft the contaminant condition categories for each of the at least three different segments of the runway. The method may further comprise transmitting the calculated required landing distance for the first segment (*e.g*., touchdown segment) of the runway, the second segment (*e.g.,* midpoint segment) of the runway, and the third segment (*e.g.,* rollout portion) of the runway to a trailing aircraft. The method may further comprise selectively generating the text annunciation graphic on the airport display in response to pilot selection of data received via a flight crew interface.

In another embodiment, a method in an aircraft having a cockpit display device on which an airport display is displayed is provided. The method comprises: dividing a runway approached for use into three segments (*e.g*., Touchdown, Midpoint and Rollout); calculating landing parameters using the runway condition code (RWYCC) for the three runway segments, wherein the calculating includes calculating a required runway length by calculating a first landing distance for a runway segment (*e.g*., Touchdown segment) of the runway, calculating a second landing distance for a second runway segment (*e.g*., midpoint segment), and calculating a third landing distance for a third runway segment (*e.g*., rollout segment); determining whether the required runway length (*e.g.,* first landing distance + second landing distance + third landing distance) is less than the available runway length for the approached runway; and when the required runway length is less than the available runway length, alerting the flight crew of a short runway condition.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A flight deck system for deployment onboard an aircraft, the flight deck system comprising:
a cockpit display device on which an airport display is displayed; and
a controller configured to:
generate a runway condition graphic having at least three different segments to be overlaid over or positioned adjacent to a depiction of a runway on the airport display, each segment of the runway condition graphic associated with a different segment of at least three different contiguous segments of the runway and configured to provide a graphical indication of a contaminant condition for the associated segment of the runway;
categorize the contaminant condition of each of the at least three different segments of the runway;
visually code each segment of the runway condition graphic in a manner that is representative of the contaminant condition category for its associated segment of the runway; and
cause the generated runway condition graphic to be overlaid over or positioned adjacent to the depiction of the runway on the airport display.

2. The flight deck system of claim 1, wherein the controller is configured to receive runway contaminant information over a datalink, the runway contaminant information including contaminant information for each of the at least three different contiguous segments of the runway.

3. The flight deck system of claim 1, wherein each segment of the runway condition graphic includes a text annunciation graphic comprising annunciation graphics configured to describe the contaminant condition of its associated segment of the runway.

4. The flight deck system of claim 3, wherein, to visually code each segment of the runway condition graphic in a manner that is representative of the contaminant condition category for its associated segment of the runway, the controller is configured to color code each segment of the runway condition graphic in a color that is representative of the contaminant condition category for its associated segment of the runway.

5. The flight deck system of claim 3, wherein the airport display comprises a two dimensional Airport Moving Map (AMM) produced on a navigation display or portable electronic device, and wherein the controller is configured to generate an information window on the two dimensional AMM containing the text annunciation graphic when the runway is selected.

6. The flight deck system of claim 1, wherein the airport display comprises a three dimensional Airport Moving Map (AMM) produced on a primary flight display or portable electronic device, and wherein the controller is configured to selectively cause the runway condition graphic to be overlaid over or positioned adjacent to the depiction of the runway on the AMM.

7. The flight deck system of claim 1, wherein the airport display is produced on a head-down display device and wherein the runway condition graphic comprises a text annunciation graphic that includes annunciation graphics configured to describe the contaminant condition of the at least three different contiguous segments of the runway.

8. The flight deck system of claim 1, wherein the airport display comprises a map that includes a depiction of the runway and that is produced on a head-down display device, wherein the runway condition graphic comprises a symbol for use with each segment of the runway, and wherein the controller is configured to cause the symbols of the runway condition graphic to be displayed adjacent to the depiction of the associated segment of the runway on the AMM.

9. The flight deck system of claim 1:
further comprising a Flight Management System (FMS) communicatively coupled to the controller, the FMS configured to receive the categorized contaminant condition for each of the at least three different segments of the runway from the controller, and perform take-off and landing calculations for the runway using the received categorized contaminant information; and
wherein the controller is configured to provide the categorized contaminant condition for each of the at least three different segments of the runway to the FMS for use when performing take-off and landing calculations for the runway.

10. The flight deck system of claim 9, wherein to perform take-off and landing calculations for the runway, the FMS is configured to calculate a required landing distance for the first segment of the runway using the categorized contaminant condition for the first segment, calculate a required landing distance for the second segment of the runway using the categorized contaminant condition for the second segment, calculate a required landing distance for the third segment of the runway using the categorized contaminant condition for the third segment, and provide an alert if the landing distance for a particular runway segment is not sufficient.

11. The flight deck system of claim 1:
further comprising a Runway Awareness and Alert System (RAAS) coupled to the controller that is configured to determine whether to generate a short runway alert for the runway based, at least in part, on the length of the runway and the categorized contaminant condition of the at least three different segments of the runway; and
wherein the controller is configured to provide the categorized contaminant condition of the at least three different segments of the runway to the RAAS for use when determining whether to generate a short runway alert for the runway.

12. A method in an aircraft having a cockpit display device on which an airport display is displayed, the method comprising:
generating a runway condition graphic having at least three different segments to be overlaid over or positioned adjacent to a depiction of a runway on the airport display, each segment of the runway condition graphic associated with a different segment of at least three different contiguous segments of the runway and configured to provide a graphical indication of a contaminant condition for the associated segment of the runway;
categorizing the contaminant condition of each of the at least three different segments of the runway;
visually coding each segment of the runway condition graphic in a manner that is representative of the contaminant condition category for its associated segment of the runway; and
causing the generated runway condition graphic to be overlaid over or positioned adjacent to the depiction of the runway on the airport display.
